# EUROPEAN PATENT APPLICATION

(11) **EP 4 450 415 A1**
(43) Date of publication of application: **23.10.2024**
(21) Application number: 23216894.8
(22) Date of filing: 14.12.2023
(51) Int. Cl.: B65D 5/52, B65D 77/04

(54) **PACKAGING BOX AND PAPERBOARD STRUCTURE**

(30) Priority: 19.04.2023 CN 202320928833 U
(71) Applicant: ShenZhen YUTO Packaging Technology Co., Ltd., Shenzhen City, Guangdong 518108 (CN)
(72) Inventor: Jiang, Zhanfeng, Shenzhen City 51810 (CN); Ding, Zhiyong, Shenzhen City 51810 (CN)
(74) Representative: Slingsby Partners LLP

(57) **Abstract**

Packaging box and paperboard structure, wherein the packaging box includes: a first box body (1) including a first board body (11) and a plurality of sidewall parts, the first board body (11) being provided with a first opening (111), two ends of the first board body (11) along a first direction (X) and two ends of the first board body (11) along a second direction (Y) being respectively bendably connected with the plurality of sidewall parts, a portion of the sidewall parts being parallel to a third direction (Z), and any two of the first direction (X), the second direction (Y), and the third direction (Z) are perpendicular to each other; and a second box body (2) including a first accommodation part (21) and a second accommodation part (22) that are bendably connected; wherein the packaging box further includes a first state and a second state.

## Description

### TECHNICAL FIELD

The present application relates to the technical field of manufacturing of packaging box, and in particular to a packaging box and a paperboard structure.

### BACKGROUND

At present, the common packaging boxes in the market have a single function. After the user receives the product, the packaging boxes have no further value for utilization. Some of them are discarded, causing certain pollution to the environment, while the others are recycled, but which is recycled is the materials of the packaging boxes. Therefore, the service life of the packaging box with a single function ends after completing the packaging and transportation of the product, the service life of the packaging boxes themselves have ended, making it difficult to be further utilized.

### SUMMARY

Embodiments of the present application provide a packaging box and a paperboard structure, which not only have packaging function but also other functions and thus can be reused.

In a first aspect, an embodiment of the present application provides a packaging box, including: a first box body including a first board body and a plurality of sidewall parts, the first board body being provided with a first opening, two ends of the first board body along a first direction and two ends of the first board body along a second direction being respectively bendably connected with the plurality of sidewall parts, a portion of the sidewall parts being parallel to a third direction, and any two of the first direction, the second direction, and the third direction are perpendicular to each other; and a second box body including a first accommodation part and a second accommodation part that are bendably connected; wherein the packaging box further includes a first state and a second state; in the first state, the second box body is located inside the first box body, and the second box body obstructs the first opening; in the second state, the first accommodation part and the second accommodation part of the second box body are both connected with an outer side of the first board body, and an interior of the first box body is exposed through the first opening.

According to an embodiment of the aspect of the present application, the sidewall parts include a first bending structure, a second bending structure, a third bending structure, and a fourth bending structure, wherein the first bending structure and the third bending structure are respectively bendably connected with the two ends of the first board body along the first direction, and the second bending structure and the fourth bending structure are respectively bendably connected with the two ends of the first board body along the second direction.

According to an embodiment of the aspect of the present application, the first bending structure includes a first side board, a first cover board, a second side board, and a second cover board that are sequentially bendably connected, and the first side board is bendably connected with the first board body; in the first state, the first side board is parallel to the third direction, and the first cover board, the second cover board, and the second side board are coplanar and parallel to the first direction; and in the second state, the first side board and the second side board are both parallel to the third direction, the first cover board and the second cover board are both parallel to the first direction, and the second cover board abuts against a side of the first board body close to the first cover board.

According to an embodiment of the aspect of the present application, the third bending structure includes a third side board and a third cover board that are bendably connected, the third side board is bendably connected with the first board body, the third side board is parallel to the third direction, and the third cover board is parallel to the first direction; and the first cover board is provided with a first socket, and the third cover board is provided with a first tongue that is inserted into and engaged with the first socket.

According to an embodiment of the aspect of the present application, the second bending structure includes a fourth side board, a fourth cover board, a fifth side board, and a fifth cover board that are bendably connected, and the fourth side board is bendably connected with the first board body; the fifth side board is provided with a first slot, the first bending structure is provided with a second slot, with a portion of the second slot located on the first cover board and a portion of the second slot located on the second side board; in the first state, the fourth side board is parallel to the third direction, and the fourth cover board, the fifth cover board, and the fifth side board are coplanar and parallel to the first direction; and in the second state, the fourth side board and the fifth side board are both parallel to the third direction, the fourth cover board and fifth cover board are both parallel to the first direction, the fifth cover board abuts against a side of the first board body close to the fourth cover board, and the first slot and the fifth side board together are inserted into and engaged with the second slot.

According to an embodiment of the aspect of the present application, the fourth bending structure includes a sixth side board, a sixth cover board, a seventh side board, and a seventh cover board that are bendably connected, and the sixth side board is bendably connected with the first board body; the seventh side board is provided with a third slot, the first bending structure is provided with a fourth slot, with a portion of the fourth slot located on the first cover board and a portion of the fourth slot located on the second side board; in the first state, the sixth side board is parallel to the third direction, and the sixth cover board, the seventh cover board, and the seventh side board are coplanar and parallel to the first direction; and in the second state, the sixth side board and the seventh side board are both parallel to the third direction, and the sixth cover board and the seventh cover board are both parallel to the first direction, the seventh cover board abuts against a side of the first board body close to the sixth cover board, and the third slot and the seventh side board together are inserted into and engaged with the fourth slot.

According to an embodiment of the aspect of the present application, the first accommodation part includes a first carrier board, a second carrier board, a first connection board, a second connection board, and a third connection board, wherein the first carrier board, the third connection board, and the second carrier board are sequentially bendably connected, and the first carrier board is bendably connected with the second accommodation part; the first connection board and the second connection board are respectively bendably connected with two ends of the second carrier board along the first direction, and the first connection board and the second connection board are respectively fixedly connected with two ends of the first carrier board along the first direction, such that the first carrier board, the second carrier board, the first connection board, the second connection board, and the third connection board form a first accommodation space with an opening; and in the second state, the third connection board is fixedly connected with the first board body.

According to an embodiment of the aspect of the present application, the second accommodation part includes a third carrier board, a fourth carrier board, a fourth connection board, a fifth connection board, and a sixth connection board, wherein the third carrier board, the sixth connection board, and the fourth carrier board are sequentially bendably connected, and the third carrier board is bendably connected with the first accommodation part; the fourth connection board and the fifth connection board are respectively bendably connected with two ends of the fourth carrier board along the first direction, and the fourth connection board and the fifth connection board are respectively fixedly connected with two ends of the third carrier board along the first direction, such that the third carrier board, the fourth carrier board, the fourth connection board, the fifth connection board, and the sixth connection board form a second accommodation space with an opening; the fifth connection board is provided with a second tongue, and the first board body is provided with a second socket; and in the second state, the second tongue is inserted into and engaged with the second socket.

According to an embodiment of the aspect of the present application, a tearing part is provided at the first opening, and in the first state, the tearing part at least partially obstructs the first opening.

In a first aspect, an embodiment of the present application provides a paperboard structure, including: a first face and a second face which are opposite to each other; and a first sub-board bent to form a first box body and including a first board zone and a plurality of sidewall zones, two ends of the first board zone along a first reference direction and two ends of the first board zone along a second reference direction being respectively connected with the plurality of sidewall zones, the first board zone being provided with a first opening, the sidewall zones being bent at least towards a direction of the first face relative to the first board zone to form a first board body and sidewall parts, and the first reference direction being perpendicular to the second reference direction; and a second sub-board bent to form a second box body and including a first accommodation zone and a second accommodation zone that are connected with each other, the first accommodation zone being bent to form a first accommodation part, and the second accommodation zone being bent to form a second accommodation part; wherein the packaging box includes a first state and a second state; in the first state, the second box body is located inside the first box body, and the second box body obstructs the first opening; in the second state, the first accommodation part and the second accommodation part of the second box body are both connected with an outer side of the first board body, and an interior of the first box body is exposed through the first opening.

In the packaging box and the paperboard structure provided by the embodiments of the present application, the first and second box bodies of the packaging box have different structures in the first state and the second state. In the first state, the second box body is located inside the first box body, and the packaged item may be placed inside the second box body, providing dual protection and buffering for the packaged item. In the second state, the second box body is bent and connected with the outer side of the first box body, allowing each of the first opening, the first accommodation part, and the second accommodation part to display the packaged item, meantime facilitating the user to take and store the packaged item. Therefore, the packaging box according to the embodiment of the present application can be used in various scenarios, as a result, the applicable range of the packaging box can be expanded, and the packaging box is easier to reuse and more environmentally friendly.

### BRIEF DESCRIPTION OF THE DRAWINGS

The accompanying drawings here are incorporated into the specification and form a part of this specification, showing embodiments in accordance with the present application, and are used together with the specification to explain the principle of the present application. In order to provide a clearer explanation of the technical solution of the embodiments of the present application, a brief introduction will be given to the accompanying drawings required in the description of the embodiments. It is evident to one ordinarily skilled in the art that other accompanying drawings can be obtained based on these drawings without any creative effort.
Fig. 1 is a structural schematic diagram of a packaging box in a first state according to a first embodiment of the present application.
Fig. 2 is another structural schematic diagram of the packaging box in the first state according to the first embodiment of the present application.
Fig. 3 is a structural schematic diagram of the packaging box in a second state according to the first embodiment of the present application.
Fig. 4 is an expanded schematic diagram of the packaging box according to the first embodiment of the present application.
Fig. 5 is another expanded schematic diagram of the packaging box according to the first embodiment of the present application.
Fig. 6 is an expanded schematic diagram of a first box body of the packaging box according to the first embodiment of the present application.
Fig. 7 is another expanded schematic diagram of the first box body of the packaging box according to the first embodiment of the present application.
Fig. 8 is a structural schematic diagram of a second box body of the packaging box according to the first embodiment of the present application.
Fig. 9 is an assembling schematic diagram of the packaging box in the second state according to the first embodiment of the present application.
Fig. 10 is a structural schematic diagram of the first box body of the packaging box in the second state according to the first embodiment of the present application.
Fig. 11 is a schematic diagram of a first face of a first sub-board of a paperboard structure according to a second embodiment of the present application.
Fig. 12 is a schematic diagram of a second side of the first sub-board of the paperboard structure according to the second embodiment of the present application.
Fig. 13 is a schematic diagram of a first side of a second sub-board of the paperboard structure according to the second embodiment of the present application.
Fig. 14 is a schematic diagram of a second side of the second sub-board of the paperboard structure according to the second embodiment of the present application.

### Numeral References:

1. first box body; 11. first board body; 111. first opening; 112. second socket; 113. tearing part; 12. first bending structure; 121. first side board; 122. first cover board; 123. second side board; 124. second cover board; 125. first socket; 126. second slot; 127. fourth slot; 13. second bending structure; 131. fourth side board; 132. fifth side board; 133. fourth cover board; 134. fifth cover board; 135. first slot; 14. third bending structure; 141. third side board; 142. third cover board; 143. first tongue; 15. fourth bending structure; 151. sixth side board; 152. seventh side board; 153. sixth cover board; 154. seventh cover board; 155. third slot;
2. second box body; 21. first accommodation part; 211. first carrier board; 212. second carrier board; 213. first connection board; 214. second connection board; 215. third connection board; 22. second accommodation part; 221. third carrier board; 222. fourth carrier board; 223. fourth connection board; 224. fifth connection board; 225. sixth connection board; 226. second tongue;
S 1. first sub-board; S 11. first board zone; S 12. first bending zone; S121, first side zone; S 122, first cover zone; S123, second side zone; S124, second cover zone; S13. second bending zone; S131, fourth side zone; S132, fifth side zone; S133, fourth cover zone; S134, fifth cover zone; S14. third bending zone; S141, third side zone; S142, third cover zone; S15. fourth bending zone; S151, sixth side zone; S152, seventh side zone; S153, sixth cover zone; S154, seventh cover zone;
S2. second sub-board; S21. first accommodation zone; S211, first carrier zone; S212, second carrier zone; S213. first connection zone; S214, second connection zone; S215, third connection zone; S22, second accommodation zone; S221, third carrier zone; S222, fourth carrier zone; S223, fourth connection zone; S224, fifth connection zone; S225, sixth connection zone;
X. first direction; Y. second direction; Z. third direction; A. first reference direction; B. second reference direction; P1. first face; P2, second face.

The implementation of the purpose, functional features, and advantages of the present application will be further explained in conjunction with the embodiments with reference to the accompanying drawings. Through the above drawings, definite embodiments of the present application have been shown, and more detailed description will be provided in the following text. These drawings and textual descriptions are not intended to limit the scope of the concept of the present application in any way, but rather to illustrate the concept of the present application to those skilled in the art by referring to specific embodiments.

### DETAILED DESCRIPTION

The exemplary embodiments will be described here in detail, and examples thereof are illustrated in the accompanying drawings. The following description relates to the drawings, unless otherwise indicated, the same numerals in different figures represent the same or similar elements. The implementations described in the following exemplary embodiments do not represent all implementations consistent with the present application. Rather, they are only examples of devices and methods consistent with aspects of the present application as detailed in the appended Claims.

It should be noted that, herein, the term "comprising", "including" or any other variants thereof intends to cover non-exclusive inclusion, such that the process, method, article or device including a series of elements not only includes these elements, but also includes other elements that are not expressly listed, or may also include elements inherent to such process, methods, article or device. Without further limitations, the element defined by the sentence "includes one ..." does not exclude the fact that the process, method, article or device including the element further has the other same element. In addition, the component, feature, element with the same name in different embodiments of the present application may have the same meaning, or may have different meanings, and the specific meaning needs to be determined depending on its interpretation in the specific embodiment or further combined with the context of the specific embodiment.

It should be understood that, although the term such as first, second, third and the like described herein are used to describe various information, these information should not be limited to these terms. These terms are only used to distinguish the information of the same type from each other. For example, without departing from the scope of the present application, the first information may also be referred to as the second information, and similarly, the second information may also be referred to as the first information. Depending on the context, the wording "if" used herein may be interpreted as "in" or "when ..." or "in response to the determination". Furthermore, as used herein, the singular form "a", "one" and "the" is intended to also include a complex form, unless the context has an opposite indication. It should be further understood, the term "comprising", "including" indicates the presence of the feature, step, operation, element, assembly, item, type, and/or group, but does not exclude the presence, appearance and/or addition of one or more other features, step, operation, element, assembly, item, type, and/or group. The terms "or" and "and/or" as used herein may be interpreted as being inclusive, or may mean any one or any combination. Thus, "A, B or C" or "A, B and/or C" means any of the following items: A; B; C; A and B; A and C; B and C; A, B and C. Exception to this definition may occur only when the combination of element, function, step or operation are exclusive of each other in certain manners. In describing the structure of the component, when one layer or one zone is referred to as located "on" or "above" another layer or another zone, it may mean that the one layer or the one zone is directly located "on" or "above" another layer or another zone, or a further other layer or zone is included between one layer or one zone and the another layer or the another zone. And, if the component is flipped, the one layer or the one zone will be located "under" or "below" the another layer or the another zone. In the embodiments of the present application, "B corresponding to A" indicates that B is associated with A, and B may be determined according to A. However, it should be understood that determining B according to A does not only mean that B is determined only according to A, but may also mean that B may also be determined according to A and/or other information.

It should be understood that the specific embodiment described herein is merely for interpreting the present application, and is not intended to limit the present application
In the subsequent description, the suffixes such as "module", "component", or "unit" used to represent elements is merely used for the purpose of facilitating the explanation of the present application, and have no specific meaning themselves. Therefore, "module", "component" or "unit" may be used in a mixed manner.

The applicant found that the packaging boxes usually only have basic packaging function, and after the packaging boxes are opened, there are usually three ways for subsequent utilization. Most packaging boxes are disposable, and after being opened, the opened packaging boxes will be abandoned and become packaging waste, which is likely to cause environmental pollution or resource waste. Some packaging boxes are also disposable, although the opened packaging boxes may also be discarded, their production materials will be recycled, also causing certain pollution and resource waste. Some other packaging boxes can be reused, but they are mostly used for packaging, so their reuse is limited to some extent.

In view of the above analysis, the applicant provides a packaging box and a paperboard structure, and the packaging box includes a first box body and a second box body. In the first state, the second box body is placed into the first box body, and the packaged item may be placed inside a first accommodation part and a second accommodation part of the second box body, such that the first and second box bodies can provide double-layer protection for the packaged item. In the second state, the second box body is taken out from the first box body, and the bending second box body is connected with the first board body of the first box body, such that the first accommodation part, the second accommodation part, and the first opening can hold and display the packaged item, facilitating the access and storage of the packaged item during use. The packaging box has multiple functions and can be used in various scenarios, and therefore, the applicable range of the packaging box can be expanded, and the packaging box is easier to reuse and more environmentally friendly.

### First Embodiment

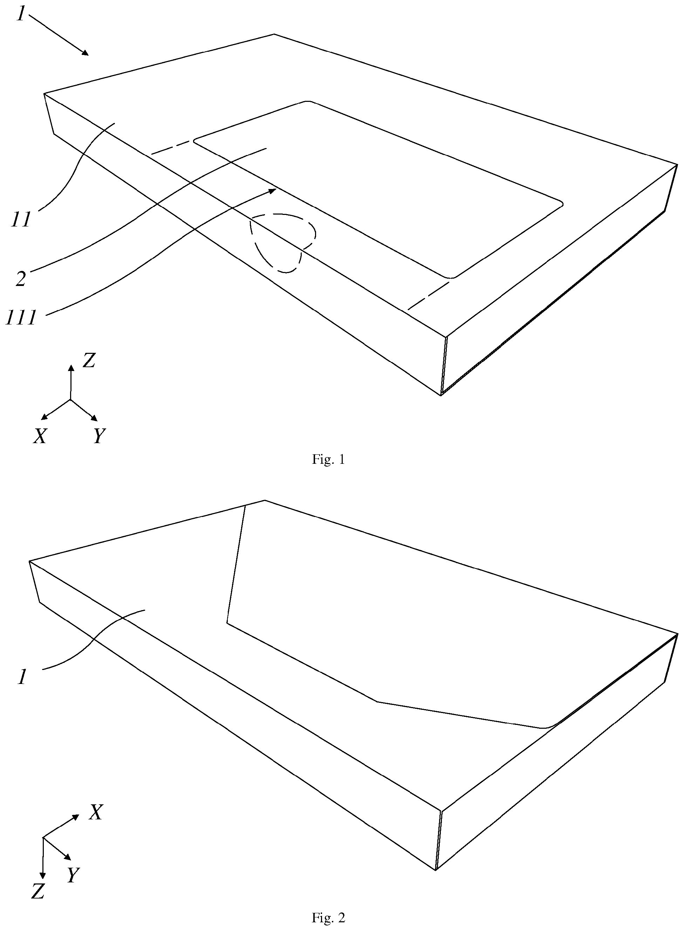

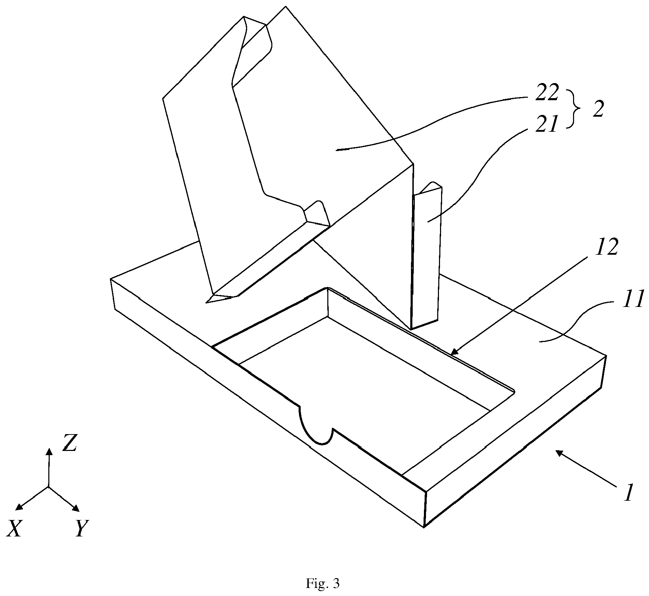

Fig. 1 is a structural schematic diagram of the packaging box in the first state according to a first embodiment of the present application. Fig. 2 is another structural schematic diagram of the packaging box in first state according to the first embodiment of the present application. Fig. 3 is a structural schematic diagram of the packaging box in the second state according to the first embodiment of the present application.

Please refer to Figs. 1 to 3, the embodiment of the present application provides a packaging box including: a first box body 1 including a first board body 11 and a plurality of sidewall parts, the first board body 11 being provided with a first opening 111, two ends of the first board body 11 along a first direction X and two ends of the first board body 11 along a second direction Y being respectively bendably connected with the plurality of sidewall part potions, a portion of each of the sidewall parts is parallel to a third direction Z, and any two of the first direction X, the second direction Y, and the third direction Z are perpendicular to each other; and a second box body 2 including a first accommodation part 21 and a second accommodation part 22 which are bendably connected with each other. The packaging box also includes a first state and a second state, in the first state, the second box body 2 is located inside the first box body 1, and the second box body 2 obstructs the first opening 111; in the second state, the first accommodation part 21 and the second accommodation part 22 of the second box body 2 are both connected with an outer side of the first board body 11, and an interior of the first box body 1 is exposed through the first opening 111.

In the embodiment of the present application, any two of the first direction X, the second direction Y, and the third direction Z are perpendicular to each other. When the packaging box according to the embodiment of the present application is placed on a horizontal plane, the first direction X and the second direction Y may be two horizontal directions perpendicular to each other, and the third direction Z is a vertical direction. The packaging box according to the embodiment of the present application may also be placed on a flat surface or curved surface that is inclined relative to the horizontal plane.

When the packaging box according to the embodiment of the present application is in the first state, the packaging box according to the embodiment of the present application has a packaging function and can be used to hold the packaged item. When the packaging box according to the embodiment of the present application is in the second state, the packaging box according to the embodiment of the present application has display and storage functions and can be used to display and store the packaged item.

The first box body 1 is used as a main carrier structure of the packaging box according to the embodiment of the present application. In the first state, the first box body 1 can form an outer layer protection for the packaging box according to the embodiment of the present application, and can also provide a certain buffer for the packaged item taking into account the structural characteristics of the first box body 1 itself. In the second state, the second box body 2 is taken out of the first box body 1, such that the first opening 111 of the first box body 1 is exposed, the interior of the first box body 1 forms an accommodation space, the packaged item can be placed or removed through the first opening 111, and this facilitates the user to store or take packaged item. Meantime, the user can view the packaged item through the first opening 111 for the purpose of displaying the packaged item. In addition, in the first state, the second box body 2 obstructs the first opening 111, thereby reducing the possibility of the packaged item being left behind from the first opening 111.

The second box body 2 is used as a main structure of the packaging box according to the embodiment of the present application to accommodate the packaged item. In the first state, the packaged item may be placed in the first accommodation part 21 and the second accommodation part 22 of the second box body 2, the second box body 2 together with the packaged item may be then placed in the first box body 1, the second box body 2 forms the inner layer protection of the packaging box according to the embodiment of the present application, and meantime, the second box body 2 can also provide a certain buffer for the packaged item in conjunction with the structural characteristics of the second box body 2 itself, thereby further improving the packaging effect of the packaging box according to the embodiment of the present application. In the second state, the second box body 2 is taken out of the first box body 1, and the packaged item may be placed in the first accommodation part 21 and the second accommodation part 22. After the first accommodation part 21 and the second accommodation part 22 are bent relative to each other, they are both connected with the first board 11 of the first box body 1, such that the first accommodation part 21 and the second accommodation part 22 are inclined relative to the first board 11, and a triangular structure may be simply formed. That is to say, in the second state, the first accommodation part 21 and the second accommodation part 22 are inclined relative to the first direction X and the second direction Y, thereby enabling to display the packaged item more fully, and meantime making it more convenient for the user to take or store the packaged item.

In each of the first state and the second state, the first box body 1 and second box body 2 of the packaging box according to the embodiment of the present application are connected in different manners to form an entirety, such that the packaging box according to the embodiment of the present application has packaging functions in the first state and has display and storage functions in the second state. Therefore, the packaging box according to the embodiment of the present application can be used in various scenarios, as a result, the applicable range of the packaging box can be expanded, and the packaging box is easier to reuse and more environmentally friendly.

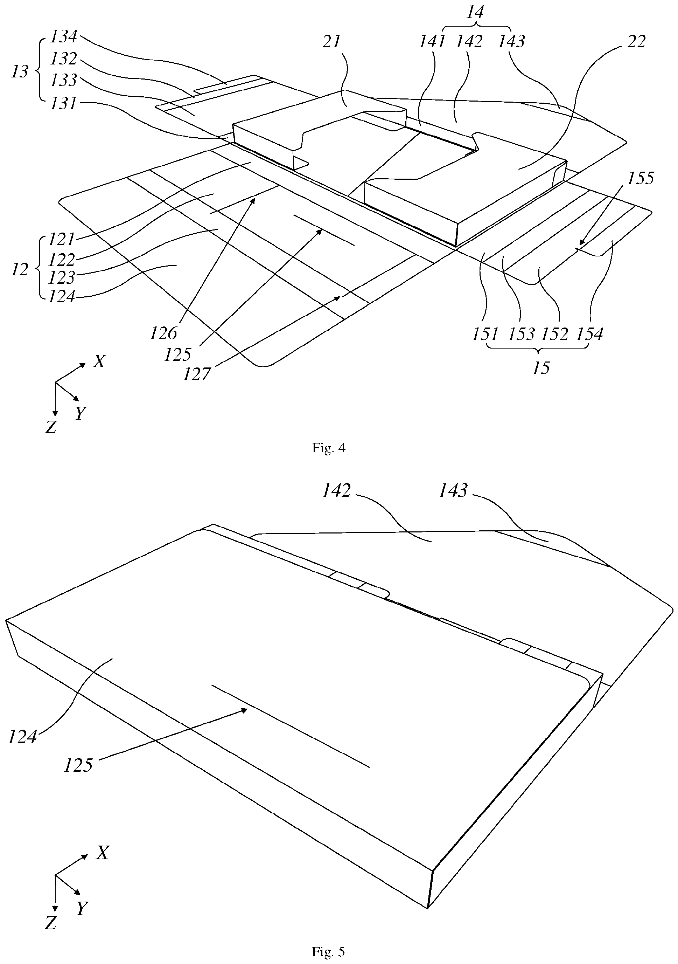

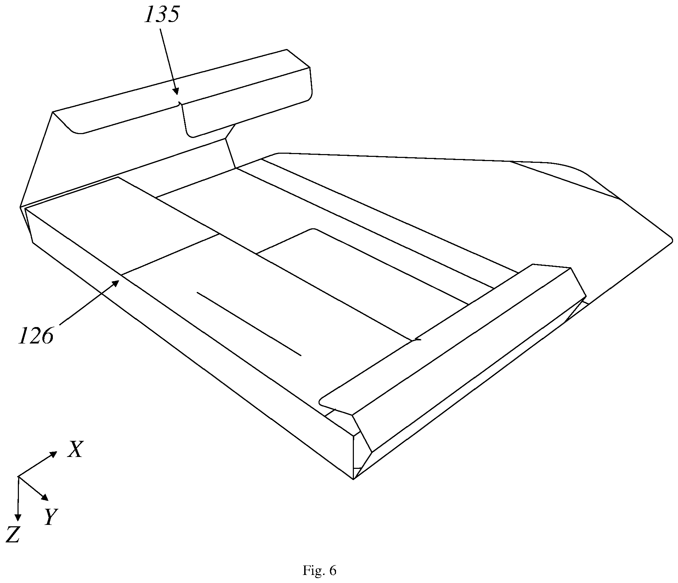

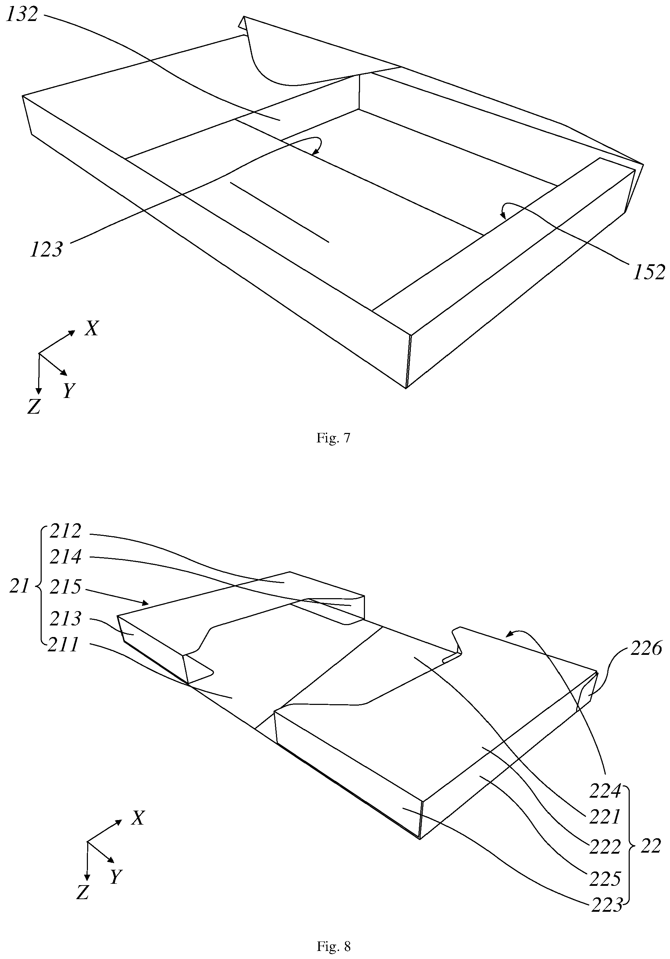

Fig. 4 is an expanded schematic diagram of the packaging box according to the first embodiment of the present application. Fig. 5 is another expanded schematic diagram of the packaging box according to the first embodiment of the present application. Fig. 6 is an expanded schematic diagram of the first box body of the packaging box according to the first embodiment of the present application. Fig. 7 is another schematic diagram of the first box body of the packaging box according to the first embodiment of the present application.

Further, please refer to Figs. 4 to 7, the sidewall parts includes a first bending structure 12, a second bending structure 13, a third bending structure 14, and a fourth bending structure 15. The first bending structure 12 and the third bending structure 14 are respectively bendably connected with the two ends of the first board body 11 along the first direction X; the second bending structure 13 and the fourth bending structure 15 are respectively bendably connected with the two ends of the first board body 11 along the second direction Y.

The packaging box according to the embodiment of the present application may be in the form of a rectangle or a cube, and correspondingly, the first box body 1 may be a rectangle or a cube. The first bending structure 12, the second bending structure 13, the third bending structure 14, and the fourth bending structure 15 of the sidewall parts correspond to four sidewalls of the packaging box according to the embodiment of the present application, respectively. The first bending structure 12 and the third bending structure 14 are respectively bendably connected with the two ends of the first board body 11 along the first direction X, in other words, the first bending structure 12 and the third bending structure 14 will bend to form a group of sidewalls of the first box body 1 which are opposite to each other. The second bending structure 13 and the fourth bending structure 15 are respectively bendably connected with the two ends of the first board body 11 along the second direction Y, in other words, the second bending structure 13 and the fourth bending structure 15 will bend to form another group of sidewalls of the first box body 1 which are opposite to each other. The first bending structure 12, the second bending structure 13, the third bending structure 14, the fourth bending structure 15, and the first board body 11 jointly bend to form the first box body 1.

Further, referring to Figs. 4 to 7, the first bending structure 12 includes a first side board 121, a first cover board 122, a second side board 123, and a second cover board 124 that are sequentially bendably connected. The first side board 121 is bendably connected with the first board body 11. In the first state, the first side board 121 is parallel to the third direction Z, and the first cover board 122, the second cover board 124, and the second side board 123 are coplanar and parallel to the first direction X. In the second state, the first side board 121 and the second side board 123 are both parallel to the third direction Z, the first cover board 122 and the second cover board 124 are both parallel to the first direction X, and the second cover board 124 abuts against a side of the first board body 11 close to the first cover board 122.

The first side board 121, the first cover board 122, the second side board 123, and the second cover board 124 of the first bending structure 12 are sequentially bendably connected, and the first side board 121 is bendably connected with the first board body 11. In each of the first state and the second state, the first side board 121 is parallel to the third direction Z, forming an outer wall of the first box body 1.

In the first state, the first cover board 122, the second cover board 124, and the second side board 123 are coplanar, jointly forming a portion of the cover board of the first box body 1. Due to the coplanarity of the first cover board 122, the second cover board 124, and the second side board 123, the internal space of the first box body 1 is fully opened, ensuring that the first box body 1 has a large space to accommodate the second box body 2.

In the second state, the second side board 123 and the second cover board 124 are bent relative to the first cover board 122. The first cover board 122 still forms a portion of the cover board of the first box body 1. Considering that the second box body 2 has been taken out of the first box body 1, the first box body 1 is in a hollow state, and the second cover board 124 abuts against an inner side of the first board body 11, enabling to support the first box body 1 and maintaining the stability of structure of the first box body 1. The second side board 123 is parallel to the third direction Z, forming an inner wall of the accommodation space at the first opening 111, thereby limiting the size of the accommodation space corresponding to the first opening 111 and ensuring that the first opening 111 can fully display the packaged item.

Further, referring to Figs. 4 to 7, the third bending structure 14 includes a third side board 141 and a third cover board 142 that are bendably connected. The third side board 141 is bendably connected with the first board body 11. The third side board 141 is parallel to the third direction Z, and the third cover board 142 is parallel to the first direction X. The first cover board 122 is provided with a first socket 125, and the third cover board 142 is provided with a first tongue 143 that is inserted into and engaged with the first socket 125.

The third side board 141 and the third cover board 142 of the third bending structure 14 are sequentially connected, and the third side board 141 is bendably connected with the first board body 11. In each of the first state and the second state, the third side board 141 is parallel to the third direction Z, forming an outer wall of the first box body 1. Meanwhile, the third cover board 142 is parallel to the first direction X, forming a portion of the cover board of the first box body 1.

The first tongue 143 of the third cover board 142 is inserted into and engaged with the first socket 125 of the first cover board 122, thereby locking the packaging box according to the embodiment of the present application and reducing the risk of the packaging box being accidentally opened. When the second box body 2 is taken out of the first box body 1, the first tongue 143 can be disengaged from the first socket 125, and then the first box body 1 can be opened. After the second box body 2 is taken out, the first tongue 143 and the first socket 125 can be re-engaged with each other to close the first box body 1.

Further, referring to Figs. 4 to 7, the second bending structure 13 includes a fourth side board 131, a fourth cover board 133, a fifth side board 132, and a fifth cover board 134 that are bendably connected. The fourth side board 131 is bendably connected with the first board body 11. The fifth side board 132 is provided with a first slot 135. The first bending structure 12 is provided with a second slot 126, with a portion of the second slot 126 located on the first cover board 122 and a portion of the second slot 126 located on the second side board 123. In the first state, the fourth side board 131 is parallel to the third direction Z, and the fourth cover board 133, the fifth cover board 134, and the fifth side board 132 are coplanar and parallel to the first direction X. In the second state, the fourth side board 131 and the fifth side board 132 are both parallel to the third direction Z, the fourth cover board 133 and the fifth cover board 134 are both parallel to the first direction X, the fifth cover board 134 abuts against a side of the first board body 11 close to the fourth cover board 133, and the first slot 135 and the fifth side board 132 together are inserted into and engaged with the second slot 126.

The fourth side board 131, the fourth cover board 133, the fifth side board 132, and the fifth cover board 134 of the second bending structure 13 are sequentially bendably connected, and the fourth side board 131 is bendably connected with the first board body 11. In each of the first state and the second state, the fourth side board 131 is parallel to the third direction Z, forming an outer wall of the first box body 1.

In the first state, the fourth cover board 133, the fifth cover board 134, and the fifth side board 132 are coplanar, jointly forming a portion of the cover board of the first box body 1. Due to the coplanarity of the fourth cover board 133, the fifth cover board 134, and the fifth side board 132, the internal space of the first box body 1 is fully opened, ensuring that the first box body 1 has a large space to accommodate the second box body 2.

In the second state, the fifth side board 132 and the fifth cover board 134 are bent relative to the fourth cover board 133. The fourth cover board 133 still forms a portion of the cover board of the first box body 1. Considering that the second box body 2 has been taken out from the first box body 1, the first box body 1 is in a hollow state, and the fifth cover board 134 abuts against the inner side of the first board body 11, enabling to support the first box body 1 and maintaining the stability of structure of the first box body 1. The fifth side board 132 is parallel to the third direction Z, forming the inner wall of the accommodation space at the first opening 111, thereby limiting the size of the accommodation space corresponding to the first opening 111 and ensuring that the first opening 111 can fully display the packaged item.

In addition, the fifth side board 132 is provided with the first slot 135, the first bending structure 12 is provided with the second slot 126, with a portion of the second slot 126 located on the first cover board 122 and a portion of the second slot 126 located on the second side board 123. In the second state, the first slot 135 and the fifth side board 132 together are inserted into and engaged with the second slot 126, forming a vertical insertion structure between the fifth side board 132 and the second side board 123, improving the structural stability of the inner wall of the accommodation space corresponding to the first opening 111.

Further, referring to Figs. 4 to 7, the fourth bending structure 15 includes a sixth side board 151, a sixth cover board 153, a seventh side board 152, and a seventh cover board 154 that are bendably connected. The sixth side board 151 is bendably connected with the first board body 11. The seventh side board 152 is provided with a third slot 155. The first bending structure 12 is provided with a fourth slot 127, with a portion of the fourth slot 127 located on the first cover board 122 and a portion of the fourth slot 127 located on the second side board 123. In the first state, the sixth side board 151 is parallel to the third direction Z, and the sixth cover board 153, the seventh cover board 154, and the seventh side board 152 are coplanar and parallel to the first direction X. In the second state, the sixth side board 151 and the seventh side board 152 are both parallel to the third direction Z, the sixth cover board 153 and the seventh cover board 154 are both parallel to the first direction X, the seventh cover board 154 abuts against a side of the first board body 11 close to the sixth cover board 153, and the third slot 155 and the seventh side board 152 together are inserted into and engaged with the fourth slot 127.

The sixth side board 151, the sixth cover board 153, the seventh side board 152, and the seventh cover board 154 of the fourth bending structure 15 are sequentially bendably connected, and the sixth side board 151 is bendably connected with the first board body 11. In each of the first state and the second state, the sixth side board 151 is parallel to the third direction Z, forming an outer wall of the first box body 1.

In the first state, the sixth cover board 153, the seventh cover board 154, and the seventh side board 152 are coplanar, jointly forming a portion of the cover board of the first box body 1. Due to the coplanarity of the sixth cover board 153, the seventh cover board 154, and the seventh side board 152, the internal space of the first box body 1 is fully opened, ensuring that the first box body 1 has a large space to accommodate the second box body 2.

In the second state, the seventh side board 152 and the seventh cover board 154 are bent relative to the sixth cover board 153. The sixth cover board 153 still forms a portion of the cover board of the first box body 1. Considering that the second box body 2 has been taken out from the first box body 1, the first box body 1 is in a hollow state, and the seventh cover board 154 abuts against the inner side of the first board body 11, enabling to support the first box body 1 and maintaining the stability of structure of the first box body 1. The seventh side board 152 is parallel to the third direction Z, forming the inner wall of the accommodation space at the first opening 111, thereby limiting the size of the accommodation space corresponding to the first opening 111 and ensuring that the first opening 111 can fully display the packaged item.

In addition, the seventh side board 152 is provided with a third slot 155, the first bending structure 12 is provided with a fourth slot 127, with a portion of the fourth slot 127 located on the first cover board 122 and a portion of the fourth slot 127 located on the second side board 123. In the second state, the third slot 155 and the seventh side board 152 together are inserted into and engaged with the fourth slot 127, forming a vertical insertion structure between the seventh side board 152 and the second side board 123, thereby improving the structural stability of the inner wall corresponding to the accommodation space of the first opening 111. In the second state, the second side board 123, the fifth side board 132, the seventh side board 152, and the third side board 141 jointly form the inner wall of the accommodation space corresponding to the first opening 111. At this time, the accommodation space corresponding to the first opening 111 shares the third side board 141 with the first box body 1.

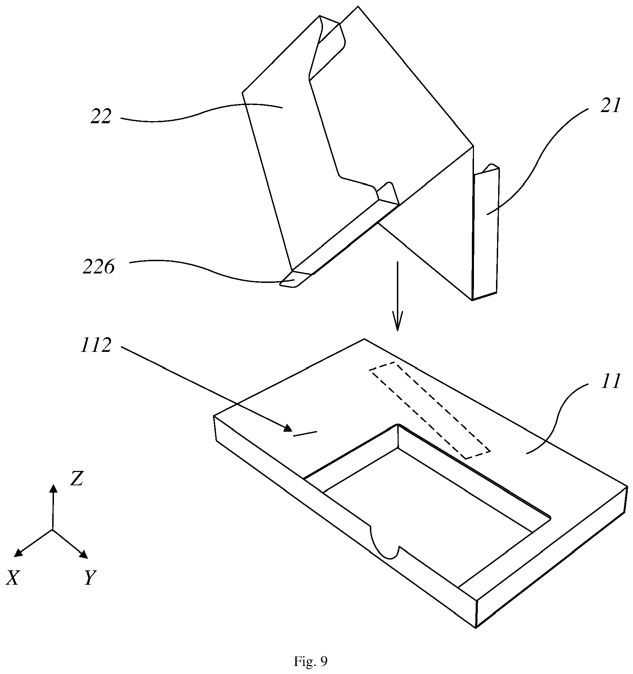

Fig. 8 is a structural schematic diagram of the second box body of the packaging box according to the first embodiment of the present application. Fig. 9 is an assembly diagram of the packaging box in the second state according to the first embodiment of the present application.

Further, please refer to Figs. 8 and 9, the first accommodation part 21 includes a first carrier board 211, a second carrier board 212, a first connection board 213, a second connection board 214, and a third connection board 215. The first carrier board 211, the third connection board 215, and the second accommodation part 212 are sequentially bendably connected, and the first carrier board 211 is bendably connected with the second accommodation part 22. The first connection board 213 and the second connection board 214 are respectively bendably connected with the two ends of the second carrier board 212 along the first direction X, and the first connection board 213 and the second connection board 214 are respectively fixedly connected with the two ends of the first carrier board 211 along the first direction X, such that the first carrier board 211, the second carrier board 212, the first connection board 213, the second connection board 214, and the third connection board 215 form a first accommodation space with an opening. In the second state, the third connection board 215 is fixedly connected with the first board body 11.

The first carrier board 211, the second carrier board 212, the first connection board 213, the second connection board 214, and the third connection board 215 of the first accommodation part 21 collectively enclose to form the first accommodation space with the opening. The third connection board 215 and the first board body 11 may be fixedly connected through adhesive bonding. The first carrier board 211, the third connection board 215, and the second carrier board 212 are sequentially bendably connected, and the first carrier board 211 is bendably connected with the second accommodation part 22. The first connection board 213 and the second connection board 214 are respectively bendably connected with the two ends of the second carrier board 212 along the first direction X, and the first connection board 213 and the second connection board 214 are respectively fixedly connected with the two ends of the first carrier board 211 along the first direction X, such that the first accommodation space forms a rectangle or a portion of a rectangle. The opening of the first accommodation space should face a side of the first carrier board 211 connected with the second accommodation part 22. In the second state, the first accommodation part 21 is bent relative to the second accommodation part 22, and the first accommodation part 21 and the second accommodation part 22 are both connected with the first board body 11. The opening of the first accommodation space can face a side away from the first board body 11, making it more convenient for the user to take or store the packaged item.

Further, referring to Figs. 8 and 9, the second accommodation part 22 includes a third carrier board 221, a fourth carrier board 222, a fourth connection board 223, a fifth connection board 224, and a sixth connection board 225. The third carrier board 221, the sixth connection board 225, and the fourth carrier board 222 are sequentially bendably connected, and the third carrier board 221 is bendably connected with the first accommodation part 21. The fourth connection board 223 and the fifth connection board 224 are respectively bendably connected with the two ends of the fourth carrier board 222 along the first direction X, and the fourth connection board 223 and the fifth connection board 224 are respectively fixedly connected with the two ends of the third carrier board 221 along the first direction X, such that the third carrier board 221, the fourth carrier board 222, the fourth connection board 223, the fifth connection board 224, and the sixth connection board 225 form a second accommodation space with an opening. The fifth connection board 224 is provided with a second tongue 226, and the first board body 11 is provided with a second socket 112. In the second state, the second tongue 226 is inserted into and engaged with the second socket 112.

The third carrier board 221, the fourth carrier board 222, the fourth connection board 223, the fifth connection board 224, and the sixth connection board 225 of the second accommodation part 22 collectively enclose to form the second accommodation space with the opening. The third carrier board 221, the sixth connection board 225, and the fourth carrier board 222 are sequentially bendably connected, and the third carrier board 221 is bendably connected with the first accommodation part 21. The fourth connection board 223 and the fifth connection board 224 are respectively bendably connected with the two ends of the fourth carrier board 222 along the first direction X, and the fourth connection board 223 and the fifth connection board 224 are respectively fixedly connected with the two ends of the third carrier board 221 along the first direction X, such that the second accommodation space forms a rectangle or a portion of a rectangle. The opening of the second accommodation space should face a side of the third carrier board 221 connected with the first accommodation part 21. In the second state, the first accommodation part 21 is bent relative to the second accommodation part 22, and the first accommodation part 21 and the second accommodation part 22 are both connected with the first board body 11. The opening of the second accommodation space can face a side away from the first board body 11, making it more convenient for the user to take or store the packaged item.

The switching process of the packaging box from the first state to the second state according to the embodiment of the present application is as follows.

The first box body 1 is opened so as to take out the second box body 2. The first bending structure 12, the second bending structure 13, the third bending structure 14, and the fourth bending structure 15 of the first box body 1 are bent. The specific bending manner has been described in the above embodiments, and will not be repeated here. For the second box body 2, the first carrier board 211 and the third carrier board 221 are bent to make the orientations of the first accommodation part 21 and the second accommodation part 22 approach to each other. At this time, the first accommodation part 21 is located on a side of the third connection board 215 away from the sixth connection board 225, and the second accommodation part 22 is located on a side of the sixth connection board 215 away from the sixth connection board 225, and the first accommodation part 21 and the second accommodation part 22 have a substantially identical orientation. Then, the third connection board 215 is bonded with the first board body 11 of the first box body 1, while the second tongue 226 is inserted into the second socket 112 on the first board body 11, as a result, the packaging box according to the present application is in the second state. At this time, the third connection board 215 is bonded with the first board body 11, and the second tongue 226 is inserted into the second socket 112, the two structure work together to fix the relative position between the first box body 1 and the second box body 2, such that the packaging box according to the embodiment of the present application can remain stable in the second state.

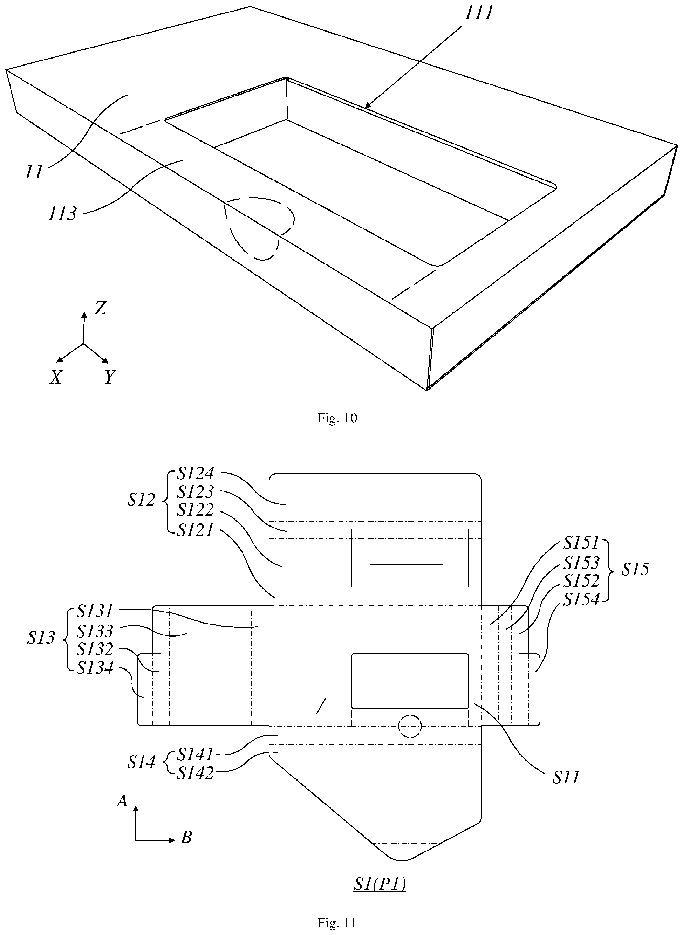

Fig. 10 is a structural schematic diagram of the first box body of the packaging box in the second state according to the first embodiment of the present application.

Further, please refer to Fig. 10, a tearing part 113 is provided at the first opening 111, and in the first state, the tearing part 113 at least partially obstructs the first opening 111.

In the first state, the tearing part 113 is not torn off from the first board body 11, and the tearing part 113 obstructs the first opening 111, reducing the risk of damage to the second box body at the first opening 111. In the second state, the tearing part 113 is torn off from the first board body 11 to expose the first opening 111, allowing the user to take or store the packaged item through the first opening 111. In the second state, the tearing part 113 may be bent towards an inner side of the first opening 111 to expose the first opening 111. It should be noted that the size of the packaged item should be less than or equal to the size of the first opening 111, so that the packaged item can be smoothly taken out from the first opening 111.

### Second Embodiment

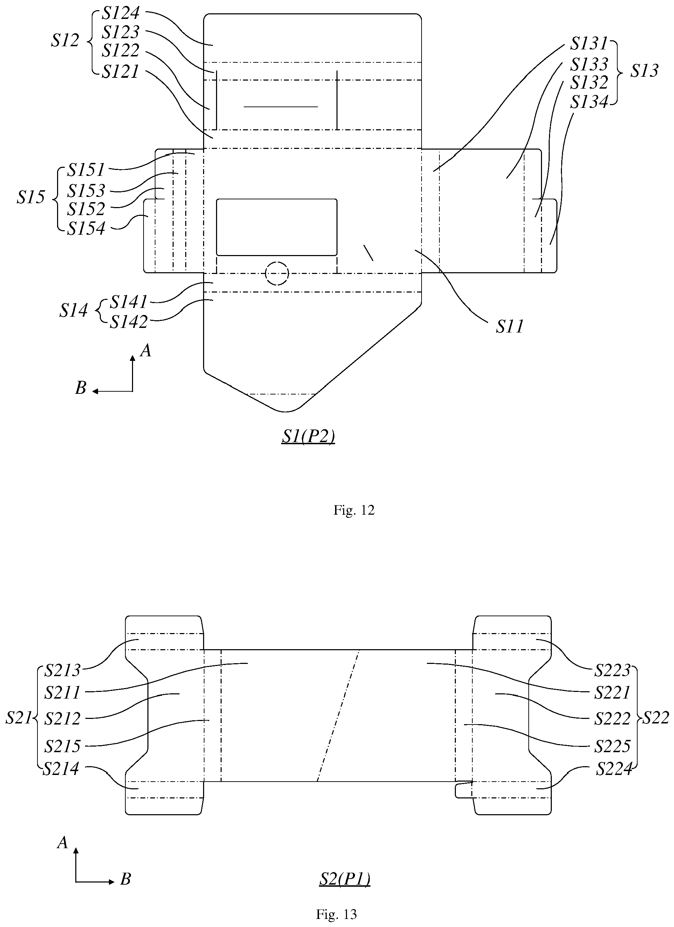

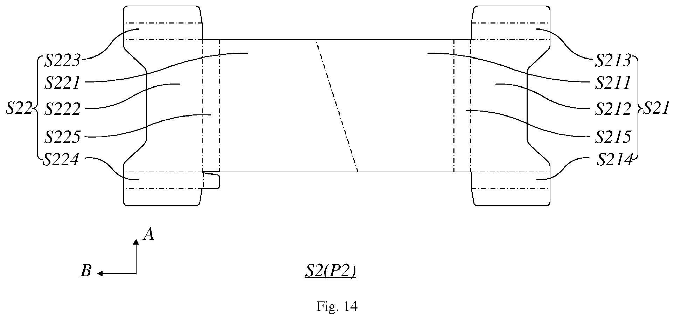

Fig. 11 is a schematic diagram of a first face of a first sub-board of a paperboard structure according to a second embodiment of the present application. Fig. 12 is a schematic diagram of a second face of the first sub-board of the paperboard structure according to the second embodiment of the present application. Fig. 13 is a schematic diagram of a first face of the second sub-board of the paperboard structure according to the second embodiment of the present application. Fig. 14 is a schematic diagram of a second face of the second sub-board of the paperboard structure according to the second embodiment of the present application.

Please refer to Figs. 11 to 14, this embodiment of the present application provides a paperboard structure, including: a first face P1 and an second face P2 which are opposite to each other; and a first sub-board S1 bent to form the first box body 1 and including a first board zone S11 and a plurality of sidewall zones, two ends of the first board zone S11 along a first reference direction A and two ends of the first board zone S11 along a second reference direction B being respectively connected with the plurality of sidewall zone, the first board zone S11 including a first opening 111, the sidewall zones being bent at least towards a direction of the first face P1 relative to the first board zone S11 to form the first board body 11 and the sidewall parts, the first reference direction A being perpendicular to the second reference direction B; and a second sub-board S2 bent to form the second box body 2 and including a first accommodation zone S21 and a second accommodation zone S22 that are connected with each other, the first accommodation zone S21 being bent to form the first accommodation part 21, and the second accommodation zone S22 being bent to form a second accommodation part 22. The first box body 1 and the second box body 2 include a first state and a second state. In the first state, the second box body 2 is located inside the first box body 1, and the second box body 2 obstructs the first opening 111. In the second state, the first accommodation part 21 and the second accommodation part 22 of the second box body 2 are both connected with the outer side of the first board body 11, and the interior of the first box body 1 is exposed through the first opening 111.

The paperboard structure according to the embodiment of the present application may be bent to form the packaging box according to the aforementioned embodiment.

When not bent, the paperboard structure may be considered as a flat structure, so two side surfaces of the flat structure are the first face P1 and the second face P2, respectively. It should be noted that, when the paperboard structure is bent, bending towards the direction of the first face P1 means that first faces P1 of two parts bent relative to each other form an angle of less than 180°, and second faces P2 of the two parts bent relative to each other form an angle of more than 180°. Correspondingly, bending towards a direction of the second face P2 direction means that second faces P2 of two parts bent relative to each other form an angle of less than 180° and first faces P1 of two parts bent relative to each other form an angle of more than 180°. In addition, the paperboard structure is in a flat state, with the first reference direction A being a vertical direction and the second reference direction B being a horizontal direction. The packaging box can be obtained by bending the paperboard structure, and the shape of the packaging box is not limited. For the convenience of explanation, a rectangular box is taken as an example.

The first sub-board S1 is bent to form the first box body 1. The first sub-board S1 includes the first board zone S11 and the plurality of sidewall zones, and the plurality of sidewall zones bend towards the direction of the first face P1 relative to the first board zone S11 to form the first board body 11 and the plurality of sidewall parts. The sidewall zones include a first bending zone S12, a second bending zone S13, a third bending zone S14, and a fourth bending zone S15. The first bending zone S12 includes a first side zone S121, a first cover zone S122, a second side zone S123, and a second cover zone S124 that are sequentially connected. The second bending zone S 13 includes a fourth side zone S131, a fourth cover zone S 133, a fifth side zone S 132, and a fifth cover zone S 134 that are sequentially connected. The third bending zone S14 includes a third side zone S141 and a third cover zone S142 that are sequentially connected. The fourth bending zone S15 includes a sixth side zone S151, a sixth cover zone S153, a seventh side zone S152, and a seventh cover zone S154 that are sequentially connected. The first side zone S121 and the third side zone S141 are respectively connected with two ends of the first board zone S11 along the first reference direction A, and the fourth side zone S131 and the sixth side zone S151 are respectively connected with two ends of the first board zone S11 along the second reference direction B.

The second sub-board S2 is bent to form the second box body 2. The second sub-board S2 includes the first accommodation zone S21 and the second accommodation zone S22. The first accommodation zone S21 includes a first carrier zone S211, a second carrier zone S212, a first connection zone S213, a second connection zone S214, and a third connection zone S215. The first carrier zone S211, the third connection zone S215, and the second carrier zone S212 are sequentially connected, and the first carrier zone S211 is connected with the second accommodation zone S22. The second accommodation zone S22 includes a third carrier zone S221, a fourth carrier zone S222, a fourth connection zone S223, a fifth connection zone S224, and a sixth connection zone S225. The third carrier zone S221, the sixth connection zone S225, and the fourth carrier zone S222 are sequentially connected, and the third carrier zone S221 is connected with the first accommodation zone S21.

When the packaging box formed by the bending of the paperboard structure according to the embodiment of the present application is in the first state, the first side zone S121, the third side zone S141, the fourth side zone S131, and the sixth side zone S151 are bent towards the direction of the first face P1 relative to the first board zone S11. The first cover zone S122 is bent towards the direction of the first face P1 relative to the first side zone S121, while the second side zone S123 and the second cover zone S124 are not bent relative to the first cover zone S122. The third cover zone S 142 is bent towards the direction of the first face P1 relative to the third side zone S141. The fourth cover zone S133 is bent towards the direction of the first face P1 relative to the fourth side zone S131, while the fifth side zone S132 and the fifth cover zone S134 are not bent relative to the fourth cover zone S133. The sixth cover zone S153 is bent towards the direction of the first face P1 relative to the sixth side zone S151, while the seventh side zone S152 and the seventh cover zone S154 are not bent relative to the sixth cover zone S153.

Meanwhile, the first carrier zone S211 is not bent relative to the third carrier zone S221. The first carrier zone S211, the third connection zone S215, and the second carrier zone S212 are sequentially bent towards the direction of the first face P1. The first connection zone S213 and the second connection zone S214 are both bent towards the direction of the first face P1 relative to the first carrier zone S211. The third carrier zone S221, the sixth connection zone S225, and the fourth carrier zone S222 are sequentially bent towards the direction of the first face P1, while the fourth connection zone S223 and the fifth connection zone S224 are both bent towards the direction of the first face P1 relative to the third carrier zone S221.

When the packaging box formed by the bending of the paperboard structure according to the embodiment of the present application is in the second state, the first side zone S121, the third side zone S141, the fourth side zone S131, and the sixth side zone S151 are bent towards the direction of the first face P1 relative to the first board zone S11. The first cover zone S122 is bent towards the direction of the first face P1 relative to the first side zone S121, while the first cover zone S122, the second side zone S123, and the second cover zone S124 are sequentially bent towards the direction of the first face P1. The third cover zone S142 is bent towards the direction of the first face P1 relative to the third side zone S141. The fourth cover zone S133 is bent towards the direction of the first face P1 relative to the fourth side zone S131, while the fourth cover zone S133, the fifth side zone S132, and the fifth cover zone S134 are sequentially bent towards the direction of the first face P1. The sixth cover zone S153 is bent towards the direction of the first face P1 relative to the sixth side zone S151, while the sixth cover zone S153, seventh side zone S152, and seventh cover zone S154 are sequentially bent towards the direction of the first face P1 relative to the sixth cover zone S153.

Meanwhile, the first carrier zone S211 is bent towards the direction of the second face P2 relative to the third carrier zone S221. The first carrier zone S211, the third connection zone S215, and the second carrier zone S212 are sequentially bent towards the direction of the first face P1, and the first connection zone S213 and the second connection zone S214 are both bent towards the direction of the first face P1 relative to the first carrier zone S211. The third carrier zone S221, the sixth connection zone S225, and the fourth carrier zone S222 are sequentially bent towards the direction of the first face P1, while the fourth connection zone S223 and the fifth connection zone S224 are both bent towards the direction of the first face P1 relative to the third carrier zone S221.

In view of above, the embodiments of the present application provide a packaging box and a paperboard structure, wherein the first and second box bodies of the packaging box have different structures in the first state and the second state. In the first state, the second box body is located inside the first box body, and the packaged item may be placed inside the second box body, providing dual protection and buffering for the packaged item. In the second state, the second box body is bent and connected with the outer side of the first box body, allowing each of the first opening, the first accommodation part, and the second accommodation part to display the packaged item, meantime facilitating the user to take and store the packaged item. Therefore, the packaging box according to the embodiment of the present application can be used in various scenarios, as a result, the applicable range of the packaging box can be expanded, and the packaging box is easier to reuse and more environmentally friendly.

The above are only preferred embodiments of the present application and are not intended to limit the scope of the present application. Any equivalent structure or equivalent process variation made using the description and accompanying drawings of the present application, or direct or indirect use of the present application in other related technical fields, are equally included in the scope of patent protection of the present application.

## Claims

1. A packaging box, **characterized by** comprising:
a first box body (1) comprising a first board body (11) and a plurality of sidewall parts, the first board body (11) being provided with a first opening (111), two ends of the first board body (11) along a first direction (X) and two ends of the first board body (11) along a second direction (Y) being respectively bendably connected with the plurality of sidewall parts, a portion of the sidewall parts being parallel to a third direction (Z), and any two of the first direction (X), the second direction (Y), and the third direction (Z) are perpendicular to each other; and
a second box body (2) comprising a first accommodation part (21) and a second accommodation part (22) that are bendably connected;
wherein the packaging box further comprises a first state and a second state; in the first state, the second box body (2) is located inside the first box body (1), and the second box body (2) obstructs the first opening (111); in the second state, the first accommodation part (21) and the second accommodation part (22) of the second box body (2) are both connected with an outer side of the first board body (11), and an interior of the first box body (1) is exposed through the first opening (111).

2. The packaging box as claimed in claim 1, **characterized in that** the sidewall parts comprise a first bending structure (12), a second bending structure (13), a third bending structure (14), and a fourth bending structure (15), wherein the first bending structure (12) and the third bending structure (14) are respectively bendably connected with the two ends of the first board body (11) along the first direction (X), and the second bending structure (13) and the fourth bending structure (15) are respectively bendably connected with the two ends of the first board body (11) along the second direction (Y).

3. The packaging box as claimed in claim 1 or 2, **characterized in that** the first bending structure (12) comprises a first side board (121), a first cover board (122), a second side board (123), and a second cover board (124) that are sequentially bendably connected, and the first side board (121) is bendably connected with the first board body (11);
in the first state, the first side board (121) is parallel to the third direction (Z), and the first cover board (122), the second cover board (124), and the second side board (123) are coplanar and parallel to the first direction (X); and
in the second state, the first side board (121) and the second side board (123) are both parallel to the third direction (Z), the first cover board (122) and the second cover board (124) are both parallel to the first direction (X), and the second cover board (124) abuts against a side of the first board body (11) close to the first cover board (122).

4. The packaging box as claimed in claim 3, **characterized in that** the third bending structure (14) comprises a third side board (141) and a third cover board (142) that are bendably connected, the third side board (141) is bendably connected with the first board body (11), the third side board (141) is parallel to the third direction (Z), and the third cover board (142) is parallel to the first direction (X); and
the first cover board (122) is provided with a first socket (125), and the third cover board (142) is provided with a first tongue (143) that is inserted into and engaged with the first socket (125).

5. The packaging box as claimed in claim 3, **characterized in that** the second bending structure (13) comprises a fourth side board (131), a fourth cover board (133), a fifth side board (132), and a fifth cover board (134) that are bendably connected, and the fourth side board (131) is bendably connected with the first board body (11);
the fifth side board (132) is provided with a first slot (135), the first bending structure (12) is provided with a second slot (126), with a portion of the second slot (126) located on the first cover board (122) and a portion of the second slot (126) located on the second side board (123);
in the first state, the fourth side board (131) is parallel to the third direction (Z), and the fourth cover board (133), the fifth cover board (134), and the fifth side board (132) are coplanar and parallel to the first direction (X); and
in the second state, the fourth side board (131) and the fifth side board (132) are both parallel to the third direction (Z), the fourth cover board (133) and fifth cover board (134) are both parallel to the first direction (X), the fifth cover board (134) abuts against a side of the first board body (11) close to the fourth cover board (133), and the first slot (135) and the fifth side board (132) together are inserted into and engaged with the second slot (126).

6. The packaging box as claimed in claim 3, **characterized in that** the fourth bending structure (15) comprises a sixth side board (151), a sixth cover board (153), a seventh side board (152), and a seventh cover board (154) that are bendably connected, and the sixth side board (151) is bendably connected with the first board body (11);
the seventh side board (152) is provided with a third slot (155), the first bending structure (12) is provided with a fourth slot (127), with a portion of the fourth slot (127) located on the first cover board and a portion of the fourth slot (127) located on the second side board (123);
in the first state, the sixth side board (151) is parallel to the third direction (Z), and the sixth cover board (153), the seventh cover board (154), and the seventh side board (152) are coplanar and parallel to the first direction (X); and
in the second state, the sixth side board (151) and the seventh side board (152) are both parallel to the third direction (Z), and the sixth cover board (153) and the seventh cover board (154) are both parallel to the first direction (X), the seventh cover board (154) abuts against a side of the first board body (11) close to the sixth cover board (153), and the third slot (155) and the seventh side board (152) together are inserted into and engaged with the fourth slot (127).

7. The packaging box as claimed in any one of claims 1 to 6, **characterized in that** the first accommodation part (21) comprises a first carrier board (211), a second carrier board (212), a first connection board (213), a second connection board (214), and a third connection board (215), wherein the first carrier board (211), the third connection board (215), and the second carrier board (212) are sequentially bendably connected, and the first carrier board (211) is bendably connected with the second accommodation part (22); the first connection board (213) and the second connection board (214) are respectively bendably connected with two ends of the second carrier board (212) along the first direction (X), and the first connection board (213) and the second connection board (214) are respectively fixedly connected with two ends of the first carrier board (211) along the first direction (X), such that the first carrier board (211), the second carrier board (212), the first connection board (213), the second connection board (214), and the third connection board (215) form a first accommodation space with an opening; and
in the second state, the third connection board (215) is fixedly connected with the first board body (11).

8. The packaging box as claimed in any one of claims 1 to 7, **characterized in that** the second accommodation part (22) comprises a third carrier board (221), a fourth carrier board (222), a fourth connection board (223), a fifth connection board (224), and a sixth connection board (225), wherein the third carrier board (221), the sixth connection board, and the fourth carrier board (222) are sequentially bendably connected, and the third carrier board (221) is bendably connected with the first accommodation part (21); the fourth connection board (223) and the fifth connection board (224) are respectively bendably connected with two ends of the fourth carrier board (222) along the first direction (X), and the fourth connection board (223) and the fifth connection board (224) are respectively fixedly connected with two ends of the third carrier board (221) along the first direction (X), such that the third carrier board (221), the fourth carrier board (222), the fourth connection board (223), the fifth connection board (224), and the sixth connection board (225) form a second accommodation space with an opening;
the fifth connection board (224) is provided with a second tongue (226), and the first board body (11) is provided with a second socket (112); and
in the second state, the second tongue (226) is inserted into and engaged with the second socket (112).

9. The packaging box as claimed in claim 8, **characterized in that** in the second state, the first accommodation part (21) is bent relative to the second accommodation part (22), the first accommodation part (21) and the second accommodation part (22) are both connected with the first board body (11), so that the opening of the second accommodation space faces a side away from the first board body (11).

10. The packaging box as claimed in any one of claims 1 to 9, **characterized in that** a tearing part (113) is provided at the first opening (111), and in the first state, the tearing part (113) at least partially obstructs the first opening (111).

11. The packaging box as claimed in claim 10, **characterized in that** in the second state,
the tearing part (113) is torn off from the first board body (11) to expose the first opening; or
the tearing part (113) is bent towards an inner side of the first opening (111) to expose the first opening.

12. A paperboard structure, **characterized by** comprising:
a first face (P1) and a second face (P2) which are opposite to each other; and
a first sub-board (S1) bent to form a first box body (1) and comprising a first board zone (S11) and a plurality of sidewall zones, two ends of the first board zone (S11) along a first reference direction (A) and two ends of the first board zone (S11) along a second reference direction (B) being respectively connected with the plurality of sidewall zones, the first board zone (S11) being provided with a first opening (111), the sidewall zones being bent at least towards a direction of the first face (P1) relative to the first board zone (S11) to form a first board body (11) and sidewall parts, and the first reference direction (A) being perpendicular to the second reference direction (B); and
a second sub-board (S2) bent to form a second box body (2) and comprising a first accommodation zone (S21) and a second accommodation zone (S22) that are connected with each other, the first accommodation zone (S21) being bent to form a first accommodation part (21), and the second accommodation zone (S22) being bent to form a second accommodation part (22);
wherein the packaging box comprises a first state and a second state; in the first state, the second box body (2) is located inside the first box body (1), and the second box body (2) obstructs the first opening (111); in the second state, the first accommodation part (21) and the second accommodation part (22) of the second box body (2) are both connected with an outer side of the first board body (11), and an interior of the first box body (1) is exposed through the first opening (111).

13. The paperboard structure as claimed in claim 12, **characterized in that** the sidewall zones comprise a first bending zone (S12), a second bending zone (S13), a third bending zone (S14), and a fourth bending zone (S15); the first bending zone (S12) comprises a first side zone (S121), a first cover zone (S122), a second side zone (S123), and a second cover zone (S124) that are sequentially connected; the second bending zone (S13) comprises a fourth side zone (S131), a fourth cover zone (S133), a fifth side zone (S132), and a fifth cover zone (S134) that are sequentially connected; the third bending zone (S14) comprises a third side zone (S141) and a third cover zone (S142) that are sequentially connected; the fourth bending zone (S15) comprises a sixth side zone (S151), a sixth cover zone (S153), a seventh side zone (S152), and a seventh cover zone (S154) that are sequentially connected; and
the first side zone (S121) and the third side zone (S141) are respectively connected with two ends of the first board zone (S11) along the first reference direction (A), and the fourth side zone (S131) and the sixth side zone (S151) are respectively connected with two ends of the first board zone (S11) along the second reference direction (B).

14. The paperboard structure as claimed in claim 12 or 13, **characterized in that** the first accommodation zone (S21) comprises a first carrier zone (S211), a second carrier zone (S212), a first connection zone (S213), a second connection zone (S214), and a third connection zone (S215); the first carrier zone (S211), the third connection zone (S215), and the second carrier zone (S212) are sequentially connected, and the first carrier zone (S211) is connected with the second accommodation zone (S22).

15. The paperboard structure as claimed in any one of claims 12 to 14, **characterized in that** the second accommodation zone (S22) comprises a third carrier zone (S221), a fourth carrier zone (S222), a fourth connection zone (S223), a fifth connection zone (S224), and a sixth connection zone (S225); the third carrier zone (S221), the sixth connection zone (S225), and the fourth carrier zone (S222) are sequentially connected, and the third carrier zone (S221) is connected with the first accommodation zone (S21).

## Amended claims

### Amended claims in accordance with Rule 137(2) EPC.

1. A packaging box, **characterized by** comprising:
a first box body (1) comprising a first board body (11) and a plurality of sidewall parts, the first board body (11) being provided with a first opening (111), two ends of the first board body (11) along a first direction (X) and two ends of the first board body (11) along a second direction (Y) being respectively bendably connected with the plurality of sidewall parts, a portion of the sidewall parts being parallel to a third direction (Z), and any two of the first direction (X), the second direction (Y), and the third direction (Z) are perpendicular to each other; and
a second box body (2) comprising a first accommodation part (21) and a second accommodation part (22) that are bendably connected;
**characterized in that**
the packaging box can further comprise a first state and a second state; in the first state, the second box body (2) is located inside the first box body (1), and the second box body (2) obstructs the first opening (111); in the second state, the first accommodation part (21) and the second accommodation part (22) of the second box body (2) are both connected with an outer side of the first board body (11), and the second box body (2) is taken out of the first box body (1) such that the first opening (111) of the first box body (1) is exposed and an interior of the first box body (1) is exposed through the first opening (111).

2. The packaging box as claimed in claim 1, **characterized in that** the sidewall parts comprise a first bending structure (12), a second bending structure (13), a third bending structure (14), and a fourth bending structure (15), wherein the first bending structure (12) and the third bending structure (14) are respectively bendably connected with the two ends of the first board body (11) along the first direction (X), and the second bending structure (13) and the fourth bending structure (15) are respectively bendably connected with the two ends of the first board body (11) along the second direction (Y).

3. The packaging box as claimed in claim 2, **characterized in that** the first bending structure (12) comprises a first side board (121), a first cover board (122), a second side board (123), and a second cover board (124) that are sequentially bendably connected, and the first side board (121) is bendably connected with the first board body (11);
in the first state, the first side board (121) is parallel to the third direction (Z), and the first cover board (122), the second cover board (124), and the second side board (123) are coplanar and parallel to the first direction (X); and
in the second state, the first side board (121) and the second side board (123) are both parallel to the third direction (Z), the first cover board (122) and the second cover board (124) are both parallel to the first direction (X), and the second cover board (124) abuts against a side of the first board body (11) close to the first cover board (122).

4. The packaging box as claimed in claim 3, **characterized in that** the third bending structure (14) comprises a third side board (141) and a third cover board (142) that are bendably connected, the third side board (141) is bendably connected with the first board body (11), the third side board (141) is parallel to the third direction (Z), and the third cover board (142) is parallel to the first direction (X); and
the first cover board (122) is provided with a first socket (125), and the third cover board (142) is provided with a first tongue (143) that is inserted into and engaged with the first socket (125).

5. The packaging box as claimed in claim 3, **characterized in that** the second bending structure (13) comprises a fourth side board (131), a fourth cover board (133), a fifth side board (132), and a fifth cover board (134) that are bendably connected, and the fourth side board (131) is bendably connected with the first board body (11);
the fifth side board (132) is provided with a first slot (135), the first bending structure (12) is provided with a second slot (126), with a portion of the second slot (126) located on the first cover board (122) and a portion of the second slot (126) located on the second side board (123);
in the first state, the fourth side board (131) is parallel to the third direction (Z), and the fourth cover board (133), the fifth cover board (134), and the fifth side board (132) are coplanar and parallel to the first direction (X); and
in the second state, the fourth side board (131) and the fifth side board (132) are both parallel to the third direction (Z), the fourth cover board (133) and fifth cover board (134) are both parallel to the first direction (X), the fifth cover board (134) abuts against a side of the first board body (11) close to the fourth cover board (133), and the first slot (135) and the fifth side board (132) together are inserted into and engaged with the second slot (126).

6. The packaging box as claimed in claim 3, **characterized in that** the fourth bending structure (15) comprises a sixth side board (151), a sixth cover board (153), a seventh side board (152), and a seventh cover board (154) that are bendably connected, and the sixth side board (151) is bendably connected with the first board body (11);
the seventh side board (152) is provided with a third slot (155), the first bending structure (12) is provided with a fourth slot (127), with a portion of the fourth slot (127) located on the first cover board and a portion of the fourth slot (127) located on the second side board (123);
in the first state, the sixth side board (151) is parallel to the third direction (Z), and the sixth cover board (153), the seventh cover board (154), and the seventh side board (152) are coplanar and parallel to the first direction (X); and
in the second state, the sixth side board (151) and the seventh side board (152) are both parallel to the third direction (Z), and the sixth cover board (153) and the seventh cover board (154) are both parallel to the first direction (X), the seventh cover board (154) abuts against a side of the first board body (11) close to the sixth cover board (153), and the third slot (155) and the seventh side board (152) together are inserted into and engaged with the fourth slot (127).

7. The packaging box as claimed in any one of claims 1 to 6, **characterized in that** the first accommodation part (21) comprises a first carrier board (211), a second carrier board (212), a first connection board (213), a second connection board (214), and a third connection board (215), wherein the first carrier board (211), the third connection board (215), and the second carrier board (212) are sequentially bendably connected, and the first carrier board (211) is bendably connected with the second accommodation part (22); the first connection board (213) and the second connection board (214) are respectively bendably connected with two ends of the second carrier board (212) along the first direction (X), and the first connection board (213) and the second connection board (214) are respectively fixedly connected with two ends of the first carrier board (211) along the first direction (X), such that the first carrier board (211), the second carrier board (212), the first connection board (213), the second connection board (214), and the third connection board (215) form a first accommodation space with an opening; and
in the second state, the third connection board (215) is fixedly connected with the first board body (11).

8. The packaging box as claimed in any one of claims 1 to 7, **characterized in that** the second accommodation part (22) comprises a third carrier board (221), a fourth carrier board (222), a fourth connection board (223), a fifth connection board (224), and a sixth connection board (225), wherein the third carrier board (221), the sixth connection board, and the fourth carrier board (222) are sequentially bendably connected, and the third carrier board (221) is bendably connected with the first accommodation part (21); the fourth connection board (223) and the fifth connection board (224) are respectively bendably connected with two ends of the fourth carrier board (222) along the first direction (X), and the fourth connection board (223) and the fifth connection board (224) are respectively fixedly connected with two ends of the third carrier board (221) along the first direction (X), such that the third carrier board (221), the fourth carrier board (222), the fourth connection board (223), the fifth connection board (224), and the sixth connection board (225) form a second accommodation space with an opening;
the fifth connection board (224) is provided with a second tongue (226), and the first board body (11) is provided with a second socket (112); and
in the second state, the second tongue (226) is inserted into and engaged with the second socket (112).

9. The packaging box as claimed in claim 8, **characterized in that** in the second state, the first accommodation part (21) is bendable relative to the second accommodation part (22), the first accommodation part (21) and the second accommodation part (22) are both connected with the first board body (11), so that the opening of the second accommodation space faces a side away from the first board body (11).

10. The packaging box as claimed in any one of claims 1 to 9, **characterized in that** a tearing part (113) is provided at the first opening (111), and in the first state, the tearing part (113) at least partially obstructs the first opening (111).

11. The packaging box as claimed in claim 10, **characterized in that** in the second state,
the tearing part (113) is torn off from the first board body (11) to expose the first opening; or
the tearing part (113) is bendable towards an inner side of the first opening (111) to expose the first opening.

12. A paperboard structure bendable to form the packaging box as claimed in any one of claims 1 to 11, **characterized by** comprising:
a first face (P1) and a second face (P2) which are opposite to each other; and
a first sub-board (S1) bendable to form the first box body (1) and comprising a first board zone (S11) and a plurality of sidewall zones, two ends of the first board zone (S11) along a first reference direction (A) and two ends of the first board zone (S11) along a second reference direction (B) being respectively connected with the plurality of sidewall zones, the first board zone (S11) being provided with the first opening (111), the sidewall zones being bendable at least towards a direction of the first face (P1) relative to the first board zone (S11) to form the first board body (11) and the sidewall parts, and the first reference direction (A) being perpendicular to the second reference direction (B); and
a second sub-board (S2) bendable to form the second box body (2) and comprising a first accommodation zone (S21) and a second accommodation zone (S22) that are connected with each other, the first accommodation zone (S21) being bendable to form the first accommodation part (21), and the second accommodation zone (S22) being bendable to form the second accommodation part (22).

13. The paperboard structure as claimed in claim 12, **characterized in that** the sidewall zones comprise a first bending zone (S12), a second bending zone (S13), a third bending zone (S14), and a fourth bending zone (S15); the first bending zone (S12) comprises a first side zone (S121), a first cover zone (S122), a second side zone (S123), and a second cover zone (S124) that are sequentially connected; the second bending zone (S13) comprises a fourth side zone (S131), a fourth cover zone (S133), a fifth side zone (S132), and a fifth cover zone (S134) that are sequentially connected; the third bending zone (S14) comprises a third side zone (S141) and a third cover zone (S142) that are sequentially connected; the fourth bending zone (S15) comprises a sixth side zone (S151), a sixth cover zone (S153), a seventh side zone (S152), and a seventh cover zone (S154) that are sequentially connected; and
the first side zone (S121) and the third side zone (S141) are respectively connected with two ends of the first board zone (S11) along the first reference direction (A), and the fourth side zone (S131) and the sixth side zone (S151) are respectively connected with two ends of the first board zone (S11) along the second reference direction (B).

14. The paperboard structure as claimed in claim 12 or 13, **characterized in that** the first accommodation zone (S21) comprises a first carrier zone (S211), a second carrier zone (S212), a first connection zone (S213), a second connection zone (S214), and a third connection zone (S215); the first carrier zone (S211), the third connection zone (S215), and the second carrier zone (S212) are sequentially connected, and the first carrier zone (S211) is connected with the second accommodation zone (S22).

15. The paperboard structure as claimed in any one of claims 12 to 14, **characterized in that** the second accommodation zone (S22) comprises a third carrier zone (S221), a fourth carrier zone (S222), a fourth connection zone (S223), a fifth connection zone (S224), and a sixth connection zone (S225); the third carrier zone (S221), the sixth connection zone (S225), and the fourth carrier zone (S222) are sequentially connected, and the third carrier zone (S221) is connected with the first accommodation zone (S21).
